# EUROPEAN PATENT SPECIFICATION

(11) **EP 1 602 279 B1**
(45) Date of publication and mention of the grant of the patent: **18.11.2009**
(21) Application number: 05076235.0
(22) Date of filing: 26.05.2005
(51) Int. Cl.: A21B 1/40, G01K 7/04

(54) **Use of a thermocouple and device for treating food products**
Verwendung eines Thermoelements und Vorrichtung zur Behandlung von Nahrungsmitteln
Utilisation d'un thermoucouple et dispositif pour traiter des produits alimentaires

(30) Priority: 01.06.2004 NL 1026302
(43) Date of publication of application: 07.12.2005
(73) Proprietor: STORK TITAN B.V., 5831 AV Boxmeer (NL)
(72) Inventor: van der Eerden, Hendrikus F. J. M., 5421 PS Gemert (NL); Aben, Eric Henricus J. C., 5846 AP Ledeacker (NL); Leferink, Bernardus W. F., 6543 PP Nijmegen (NL); van Doorn, Hendrikus Cornelis Koos, 5853 AN Siebengewald (NL)
(74) Representative: Volmer, Johannes Cornelis

(56) References cited:
- EP-A- 0 953 286
- SCHMIDT H: "SCHNELLE, KOAXIALE MINI-THERMOELEMENTE" TECHNISCHES MESSEN ATM, R.OLDENBOURG VERLAG. MUNCHEN, DE, vol. j242-2, no. 446, March 1973 (1973-03), pages 53-56, XP002142100 & SCHMIDT H: "SCHNELLE, KOAXIALE MINI-THERMOELEMENTE" March 1973 (1973-03), TECHNISCHES MESSEN ATM, R.OLDENBOURG VERLAG. MUNCHEN, DE, PAGE(S) 53-56 , XP002142100

## Description

Thermocouples are generally known and are used for temperature measurement and/or control in many (industrial) processes and devices intended for these processes.

A thermocouple generally comprises two wires made from different metals, which extend in a first direction and are in contact with one another at a measurement point at their ends. This measurement point is referred to in the specialist field as the "junction", a term which will be used below in the present description. The other ends of the wires can be coupled to the terminals of the measurement instrument. When the junction (hot weld) is heated, a small voltage can be measured across the ends, known as the Seebeck effect. This Seebeck effect is composed of two components, namely the Peltier voltage built up at the junction and the terminals, and the Thomson voltage generated in the wires as a result of the temperature gradient. The wires are generally accommodated in a thermocouple rod which comprises a protective sleeve. The junction may be accommodated within a protective cap. A protection of this type can also be omitted in order to obtain a faster response in the event of temperature changes.

One use of thermocouples is for the measurement and control of temperature in a device for treating food products with conditioned air, in particular an oven. A device of this type typically comprises a housing with an entry for products to be treated and an exit for treated products, a conveyor device being provided for conveying the products from the entry to the exit. While they are being transported in the treatment device, the products are exposed to conditioned air, such as air at a high temperature and/or steam. Cf. for example EP-A-0 953 286 or US 5,676,044. The conditioned air is prepared in a suitable way, for example with the aid of heat exchangers, and circulated through the device with the aid of fans.

In a practical embodiment of an oven in accordance with the abovementioned patent application, one or more thermocouples are disposed vertically in the oven chamber, hanging from the hood of the oven, the housing of which is composed of a trough and a hood. When the oven is in use, the thermocouple measures the temperature in the oven space. The measurement signal is used to control the temperature in the oven.

It has now been found that significant fluctuations, in particular sudden drops followed over the course of time by rapid increases, occur in the measurement signal from the thermocouple. This leads to constant changes in the temperature control and relatively extensive deviations of the temperature in the oven space from the desired treatment temperature. This phenomenon is observed in particular in a humid oven atmosphere with dew points from approximately 80°C and under moderate temperature conditions up to approximately 150°C, with the temperature higher than or at least equal to the dew point.

It is an object of the present invention to eliminate one or more of the abovementioned drawbacks.

More particularly, it is an object of the invention to provide a thermocouple, in particular for use in a treatment device for treating food products with conditioned air, which provides a more stable measurement signal.

A further object of the invention is to provide a treatment device of this type for treating food products with conditioned air, in particular an oven, having a thermocouple-based temperature control for maintaining a constant treatment temperature.

According to the invention, in the thermocouple of the type described in the introduction, for this purpose the ends are bent with respect to the said first direction, as defined in use claim 1.

The device is based on the insight that moisture which is present within the treatment space condenses locally, inter alia on the thermocouple, and accumulates at the bottom end of the latter in the form of drops. In other words, it accumulates at the position where the junction is located in the case of a vertically disposed thermocouple with a conventional configuration. In this situation, the thermocouple is measuring the temperature of the drops rather than the temperature of the air. These drops cause a fall in the measurement signal. In response to this measurement signal, the temperature control supplies more heat to the device in order to match the measurement signal to a desired, predetermined temperature value. Over the course of time, the drop drops off the bottom end, so that the thermocouple is once again measuring the temperature which is actually present in the oven space, but this temperature, as a result of the additional heat supplied, has in the meantime risen to above the desired temperature, with the result that the temperature control causes less heat to be fed to the device. This process of drop formation and influencing the temperature control constantly recurs and causes the interference which has been recorded in the measurement signal, together with temperature fluctuations.

In the thermocouple used according to the invention, the ends, and therefore the junction, are bent with respect to the first (longitudinal) direction of the metal wires. This enables the thermocouple to be positioned in such a way that the junction is no longer the lowest point of the thermocouple. Any drops which condense on the junction flow directly to the lowest point, and therefore have much less or no influence on the measurement signal. This leads to a more stable measurement signal and, when used in a temperature control system, to a more constant temperature. The same also applies if the humidity of the conditioned air is subject to fluctuations, for example when using steam of varying quality.

The ends are advantageously bent through an angle of at least 90°.

It is preferable for the ends to extend in a direction opposite to the said first direction. In this preferred embodiment, given a vertical arrangement of the thermocouple, the junction is bent through an angle of approximately 180° with respect to the thermocouple rod in which the wires are generally disposed parallel to one another in the said first direction. The junction is therefore shifted upwards, so that the measurement point is not at the lowest point of the thermocouple, and any condensed drops have no interfering influence on the measurement signal. Even when disposed horizontally, the thermocouple can be positioned in such a manner that the measurement point is not at the lowest point.

In a further embodiment, the thermocouple, in particular the thermocouple rod, is provided with a protective cap for shielding the measurement point from moisture. Any drops which condense on the thermocouple rod and flow down the rod are diverted away by the protective cap, so that it is impossible for them to reach the junction under any circumstances.

The thermocouple according to the invention may be of any type known in the specialist field with standard combinations of metals. A temperature-measuring device equipped with a thermocouple according to the invention may comprise the standard reference and/or compensation circuits or programs.

The invention relates to the use of a thermocouple for controlling the temperature in a device for treating food products with conditioned air, in particular an oven. In this use according to the invention, the abovementioned drawbacks of the prior art do not arise and a stable treatment temperature is achieved.

A further aspect of the invention relates to a treatment device for treating food products with conditioned air, in particular an oven, provided with at least one thermocouple as defined in claims 1-4. The treatment device, in particular an oven for baking, roasting or cooking (or otherwise treating with heated and/or humid air) food products, in particular meat products, such as chicken pieces, products preformed from meat material, such as hamburgers, etc., generally comprises, as has already been indicated in the discussion of the prior art, a housing, optionally composed of more than one part, with an entry for products to be treated and an exit for treated products. A conveyor passes the products through the treatment space, which may be divided into a plurality of sections each with a dedicated temperature measurement and control system, from the entry to the exit. The conveyor may be of rectilinear configuration, as used in a tunnel oven, or of helical configuration. The climate control can be effected in a manner which is known per se, except for the provision of one or more thermocouples according to the invention. A preferred embodiment relates to an oven with helical conveyor in which at least one thermocouple according to the invention is suspended from the roof of the housing, in particular from a removable cap thereof.

The invention is explained below with reference to the appended drawing, in which:
Figs. 1 and 2 show an embodiment of a thermocouple according to the invention; and
Fig. 3 shows an embodiment of an oven according to the invention.

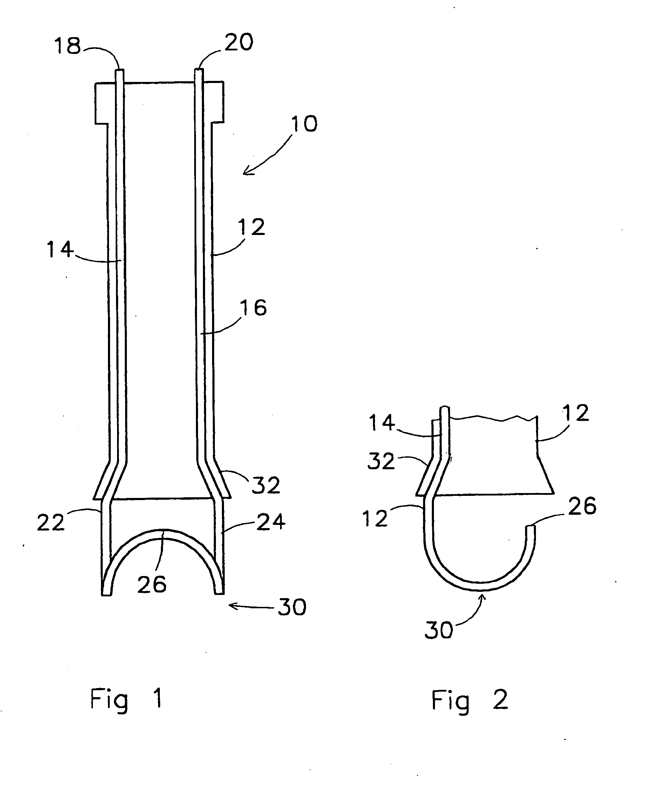

Figs. 1 and 2 diagrammatically depict an embodiment of a thermocouple according to the invention. The thermocouple, denoted overall by reference numeral 10, comprises a thermocouple rod 12 made from a heat-resistant, electrically nonconductive material, in which two wires 14 and 16 are arranged parallel to and isolated from one another in the longitudinal direction of the rod 12. The wires 14 and 16 are made from different metals. At one end 18 and 20, the wires can be connected to the generally copper terminals of the associated measurement device. The other ends 22 and 24 are in contact with one another and form a junction 26, the measurement point. The thermocouple rod 12 shields the wires 14 and 16 from their ends 18 and 20, respectively, to close to the junction 26. The junction 26 is not shielded and is in direct contact with the atmosphere whereof the temperature is to be measured. In this thermocouple 10, the wire ends 22 and 24 are bent through 180°, so that the junction 26 is located above the lowest point, denoted by reference numeral 30. Drops of condensation which accumulate on the bottom end of the thermocouple 10 during use flow towards this lowest point and then drop off at some time. Consequently, these drops cannot interfere with the measurement signal from the thermocouple 10. A protective cap 32, which shields the junction 26 and wire ends 22 and 24 from drops of moisture which condense on the thermocouple and flow downwards during use, is provided at the lower end of the thermocouple rod 12, above the junction 26. This reduces the risk of interference with the measurement signal still further.

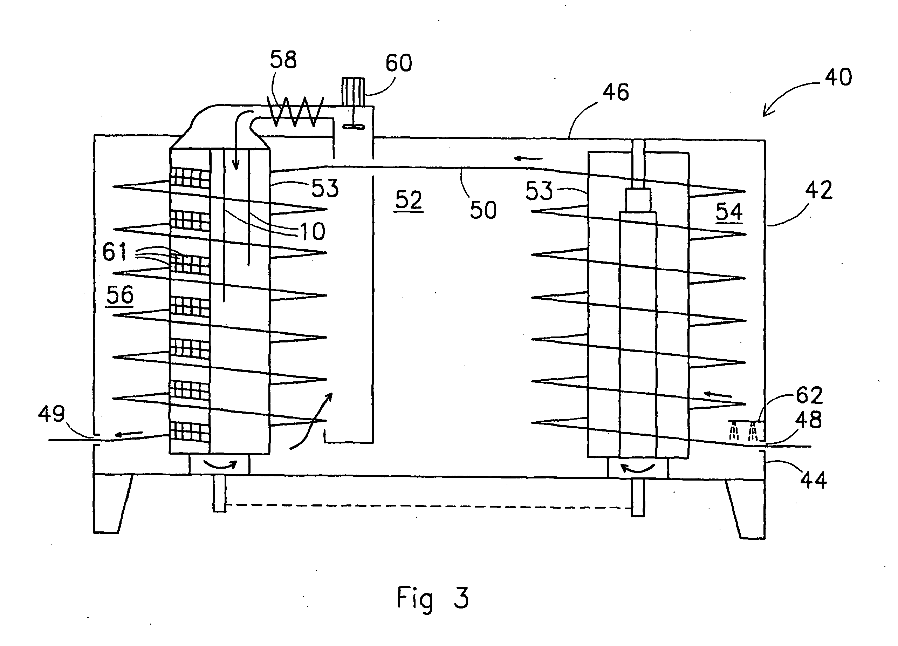

Fig. 3 shows a diagrammatic embodiment of an oven according to the invention. The oven 40 comprises a housing 42, which comprises a trough 44 for collecting fat, drops and the like, and a cap 46. In the cap 46 there are openings or cutouts which are used as entry 48 and exit 49 for the food products. From the entry 48, a conveyor 50 runs through the oven space 52 delimited by the housing 42 to the exit 49. The conveyor 50 is in this case an endless conveyor belt, for example a so-called grill belt, which is designed to receive the food products (not shown) and is driven by at least one of the central columns 53. The conveyor 50 passes through a helical conveyor path, which in a first section 54 of the oven space 52 runs upwards from the entry 48, crosses over the oven space at the top side of the column 53 and in a second section 56 continues downwards to the exit 49. Heat exchangers 58, of which only one is diagrammatically indicated, in the head space for the cap 46 are responsible for conditioning the oven atmosphere which is circulated with the aid of fans 60 (only one of these is illustrated) from the interior of a column 53 through outlet openings 61, over the products on the conveyor 50. In each section 54 and 56, the atmosphere can be set to a specific temperature and/or humidity level, for example using spray means 62. In the embodiment illustrated, diagrammatically depicted thermocouples 10 according to the invention are provided for the purpose of temperature control; the thermocouples are suspended vertically in the columns 53 from the bottom of the cap 46.

## Claims

1. Use of a thermocouple, comprising two wires made from different metals, which extend in a first direction and are in contact with one another at a measurement point at one of their ends (22,24) **characterized in that** said ends (22, 24) are bent with rested to the said first direction such that the measurement point is not at the lowest point of the thermocouple (10), for controlling the temperature in a device for treating food products with conditioned air.

2. Use of a thermocouple according to claim 1, **characterized in that** the ends (22, 24) extend in a direction opposite to the said first direction.

3. Use of a thermocouple according to claim 1, **characterized in that** it is provided with a protective cap for shielding the measurement point (26) from moisture.

4. Use of a thermocouple according to claim 1, where the device for treating food products with conditioned air is an oven (40).

5. Device for treating food products with conditioned air, in particular an oven (40), provided with at least one thermocouple (10) as defined in one of the preceding claims 1 to 4, said thermocouple comprising two wires made from different metals, which extent in a first direction and are in contact with one another at a measurement point at one of their ends (22,24) **characterized in that** said ends (22, 24) are bent with rested to the said first direction such that the measurement point is not at the lowest point of the thermocouple (10).

## Patentansprüche

1. Verwendung eines Thermoelements mit zwei aus unterschiedlichen Metallen hergestellten Drähten, die in einer ersten Richtung verlaufen und bei einer Messstelle an einem ihrer Enden (22, 24) miteinander in Verbindung stehen, **dadurch gekennzeichnet, dass** die Enden (22, 24) bezüglich der ersten Richtung derart gekrümmt sind, dass sich die Messstelle nicht an dem untersten Punkt des Thermoelements (10) befindet, zum Steuern der Temperatur in einer Einheit zum Behandeln von Lebensmittelprodukten mit klimatisierter Luft.

2. Verwendung eines Thermoelements nach Anspruch 1, **dadurch gekennzeichnet, dass** die Enden (22, 24) in einer Richtung verlaufen, die entgegengesetzt zu der ersten Richtung ist.

3. Verwendung eines Thermoelements nach Anspruch 1, **dadurch gekennzeichnet, dass** es mit einer Schutzkappe zum Schützen der Messstelle (26) vor Feuchtigkeit versehen ist.

4. Verwendung eines Thermoelements nach Anspruch 1, wobei die Einheit zum Behandeln von Lebensmittelprodukten mit klimatisierter Luft ein Ofen (40) ist.

5. Einheit zum Behandeln von Lebensmittelprodukten mit klimatisierter Luft, insbesondere ein Ofen (40), versehen mit mindestens einem Thermoelement (10) wie definiert in einem der vorherigen Ansprüche 1 bis 4, wobei das Thermoelement zwei aus unterschiedlichen Metallen hergestellte Drähte umfasst, die in einer ersten Richtung verlaufen und bei einer Messstelle an einem ihrer Enden (22, 24) miteinander in Verbindung stehen, **dadurch gekennzeichnet, dass** die Enden (22, 24) bezüglich der ersten Richtung derart gekrümmt sind, dass sich die Messstelle nicht an dem untersten Punkt des Thermoelements (10) befindet.

## Revendications

1. Utilisation d'un thermocouple, comprenant deux fils réalisés à partir de métaux différents qui s'étendent dans une première direction et qui sont en contact l'un avec l'autre à un point de mesure au niveau de l'une de leurs extrémités (22, 24), **caractérisée en ce que** lesdites extrémités (22, 24) sont pliées par rapport à ladite première direction de sorte que le point de mesure n'est pas au niveau du point le plus bas du thermocouple (10) pour contrôler la température dans un dispositif pour traiter les produits alimentaires avec de l'air conditionné.

2. Utilisation d'un thermocouple selon la revendication 1, **caractérisée en ce que** les extrémités (22, 24) s'étendent dans une direction opposée à ladite première direction.

3. Utilisation d'un thermocouple selon la revendication 1, **caractérisée en ce qu'**il est prévu avec un capuchon de protection pour protéger le point de mesure (26) de l'humidité.

4. Utilisation d'un thermocouple selon la revendication 1, dans laquelle le dispositif pour traiter les produits alimentaires avec l'air conditionné est un four (40).

5. Dispositif pour traiter des produits alimentaires avec de l'air conditionné, en particulier un four (40), prévu avec au moins un thermocouple (10) défini comme l'une quelconque des revindication 1 à 4, ledit thermocouple comprenant deux fils réalisés à partir de métaux différents, qui s'étendent dans une première direction et sont en contact l'un avec l'autre à un point de mesure au niveau de l'une de leurs extrémités (22, 24), **caractérisé en ce que** lesdites extrémités (22, 24) sont pliées par rapport à ladite première direction de sorte que le point de mesure n'est pas au point le plus bas du thermocouple (10).
